# EUROPEAN PATENT APPLICATION

(11) **EP 2 863 395 A1**
(43) Date of publication of application: **22.04.2015**
(21) Application number: 12878719.9
(22) Date of filing: 13.06.2012
(51) Int. Cl.: H01B 3/30, H01B 3/00

(54) **INSULATING MATERIAL AND HIGH VOLTAGE DEVICE USING SAME**

(71) Applicant: Hitachi, Ltd., Tokyo 100-8280 (JP)
(72) Inventor: KATO Tetsuji, Tokyo 100-8280 (JP); SANO Akihiro, Tokyo 100-8280 (JP); OTAKE Atsushi, Tokyo 100-8280 (JP); KOBAYASHI Kinya, Tokyo 100-8280 (JP)
(74) Representative: MERH-IP Matias Erny Reichl Hoffmann
(86) International application number: PCT/JP2012/065117
(87) International publication number: WO 2013/186872

(57) **Abstract**

An insulating material having improved withstand voltage strength in a predetermined direction and improved toughness in a direction perpendicular thereto is provided.

An insulating material includes a matrix resin 51, a layered compound 53, and fine particles 52, in which the layered compound 53 and the fine particle 52 are in a state dispersed in the matrix resin 51, the layered compound 53 in a plate or bar-like form is used with the major axes thereof being oriented in a predetermined direction, and a plurality of the fine particles 52 are agglomerated to form a dendritic structure and dispersed between adjacent layered compounds 53.

## Description

### Technical Field

The present invention relates to an insulating material and high voltage equipment using the material to portions that require electrical insulation.

### Background Art

For high voltage equipment typically represented by molded transformers, switch gears, and motors, size reduction thereof has been progressed with a view point of energy saving, resource saving, and efficiency improvement. The size reduction of the equipment involves thickness reduction of the insulating material constituting the equipment, which may cause problems such as lowering of a toughness value of the insulating material, lowering of a withstand voltage and of temperature increase due to heat generated inside.

Addition of an inorganic material and an organic material to the insulating material is effective for improving characteristics of the insulating material. Particularly, for improving the withstand voltage, a method of adding a layered compound having high insulation property such as clay has been known generally.

Patent Literature 1 discloses a technique of blending an organified clay to an ionomer resin and extrusion molding the blend into a configuration in which the organified clay is oriented, thereby improving the modulus of elasticity and the mechanical strength.

Patent Literature 2 discloses a resin composition having partial discharge resistance comprising an epoxy resin, an epoxy resin hardener, and inorganic nano-particles comprising a layered clay mineral in which the inorganic nano-particles are dispersed uniformly in the epoxy resin.

Patent Literature 3 discloses a technique of intercalating quaternary ammonium ions between layers of a layered clay compound in an epoxy resin composition comprising an epoxy resin, an epoxy resin hardener, and a layered clay compound thereby increasing the interlayer distance and making the interlayer portion oleophilic.

Further, non-Patent Literature 1 describes a result of analysis for a phenomenon that a toughness value of a resin is improved due to a network structure.

### Prior Art Literature

### Patent Literature

Patent Literature 1: JP-2009-235149-A
Patent Literature 2: JP-2009-191239-A
Patent Literature 3: JP-2005-179569-A

### Non-patent Literature

Non-Patent Literature 1: A. Sano, A. Ohtake, K. Kobayashi, H. Matsumoto: Development of Simulation Techniques for Mechanical Strength of Nanocomposite Insulating Materials, ISEIM 2011

### Summary of the Invention

### Problem to be Solved by the Invention

When a layered compound is added to a resin and the layered compound is oriented inside the resin, characteristics such as a gas barrier property and an insulation property in the lamination direction of the layered compound can be improved.

Generally, peeling and crack development tend to be caused more at an adhesion interface between different kind of materials when compared with adhesion strength between identical kind of materials. Under the condition of generating heat, peeling tends to occur due to difference of heat expansion coefficient in addition to the effect due to difference of adhesion strength. Accordingly, when the fracture surface of a resin in which a layered compound is added inside an insulating material is observed under an electron microscope, the layered compound is often observed along the fracture surface. Further, when the layered compound is oriented inside, since the planar direction of the layer of the layered compound in which cracks tend to develop is arranged in one direction, toughness in the direction perpendicular to the lamination direction of the layered compound is lowered.

The Patent Literature 1 contain no description of optimizing the anisotropy of crack development and the developing cracks and does not describe an insulating material having high toughness value and withstand voltage.

Further, Patent Literatures 2 and 3 describe uniform dispersion of a layered clay mineral or a layered clay compound as one of advantageous effects. However, development of crack cannot be suppressed sufficiently by mere uniform dispersion.

While Non-Patent Literature 1 describes that development of crack is suppressed by a network structure, an oriented structure is not formed and the literature contains no description for taking an advantage inherent to the oriented structure.

The present invention intends to improve a withstand voltage strength in a particular direction of an insulating material and the toughness in the direction in perpendicular thereto, and improve the reliability of high voltage equipment by using the insulating material.

### Means for Solving the Problem

The present invention provides an insulating material comprising a resin matrix, a layered compound, and fine particles characterized in that the layered compound and the fine particles are dispersed in the matrix, the layered compound is in a plate-like or bar-like form with the major axes thereof being oriented in a predetermined direction, and a plurality of the fine particles are agglomerated to form a dendritic structure and dispersed between adjacent layered compounds.

### Effects of the Invention

According to the present invention, since the oriented layered compound improves the insulation property and the fine particles having less affinity with the matrix resin form a dendritic structure to increase the toughness, an insulating material of high withstand voltage and high toughness value can be obtained.

### Brief Description of Drawings

Fig. 1A is a schematic view illustrating a crack development path.
Fig 1B is a schematic view illustrating a crack development path.
Fig. 2 is a graph illustrating a relation between a length of a peeling path and a peeling energy.
Fig. 3 is a schematic perspective view illustrating an experimental system for measuring a toughness value of a test specimen.
Fig. 4 is a cross-section SEM image showing a hardened resin product of an example.
Fig. 5 is a schematic view illustrating a fine structure of the hardened resin product of the example.
Fig. 6 is a graph showing the ratio of numbers of fine particles relative to the polarization difference between a layered compound and fine particle.
Fig. 7A is a schematic view illustrating a fine structure of a hardened resin product of the example.
Fig. 7B is a schematic view illustrating a fine structure of a hardened resin product of the example.
Fig. 8 is a cross sectional view illustrating an electric wire used for motors, etc.
Fig. 9 is a fragmentary cross sectional perspective view schematically illustrating a molded transformer.
Fig. 10 is a fragmentally cross sectional perspective view schematically illustrating a stator portion of a motor.

### Modes for Carrying Out the Invention

The present invention provides an insulating material comprising a resin matrix, a layered compound, and fine particles in which the layered compound is oriented, characterized in that the fine particles are agglomerated at the periphery of the layered compound to form a dendritic structure (hereinafter also referred to as "arborescent structure").

"Orientation" means herein that 90% or more, preferably, 95% or more of a layered compound observed under a transmission electron microscope are substantially in parallel with a predetermined direction (orientation direction) in a view field of 1.5 µm x 1.5 µm at an arbitrary place of a molded product. "Substantially in parallel" means that an angle formed between an axial line that can be recognized as a longitudinal direction of the layered compound and an axial line in a predetermined direction is within 0° (axial lines are identical) to 45°. Further, the lamination direction of the layered compound means a direction in perpendicular to the orientation direction of the layered compound.

An insulating material according to preferred embodiments of the present invention is to be described.

The insulating material comprises a resin matrix, a layered compound, and fine particles in which the layered compound and the fine particle are dispersed in the matrix, the layered compound is in a plate-like or bar-like form with the major axes thereof being oriented in a predetermined direction, and a plurality of the fine particles are agglomerated to form a dendritic structure and dispersed between adjacent layered compounds.

In the insulating material, a distribution zone of the fine particles preferably form a linear structure in a direction in which the major axes of the layered compound are laminated.

In the insulating material, the fine particles are preferably agglomerated to a gravitational center of a polygonal shape formed with a line that connects two ends of the layered compounds as a side.

In the insulating material, it is preferred that the matrix and the layered compound are hydrophilic and the fine particles is hydrophobic.

In the insulating material, it is preferred that the matrix and the layered compound are hydrophobic and the fine particles are hydrophilic.

In the insulating material, the major axes of the layered compounds preferably have a direction in which 90% or more thereof is within a range of -45° to 45°.

In the insulating material, the layered compound preferably comprises at least one member selected from the group consisting of silicates, montmorillonite, graphite, and boron nitride.

In the insulating material, the average value of the primary particle diameter of the fine particles is preferably from 1 to 100 nm.

The insulating material described above is applicable to high voltage equipment such as molded transformers, switch gears, and motors.

As the matrix of the insulating material, an epoxy resin having hydroxyl groups on the side chains, an acrylic resin typically represented by polymethyl methacrylate having carboxyl groups on the side chains, and a resin having a hydrophilic side chains such as nylon having amide bonds are applicable.

The fine particles include inorganic compounds, organic compounds, or organic/inorganic composites. The inorganic compounds includes, for example, silicon compounds such as silica and silicone, inorganic oxides such as alumina and titanium oxide, and inorganic nitrides typically represented by nitrides such as boron nitride. The organic compounds include, for example, organic elastomers such as styrene butadiene rubber and nitrile rubber. The organic/inorganic composite is an organic/inorganic composite such as organic clay in which the surface of inorganic mineral such as mica is modified with an organic salt.

The surface of the fine particles is preferably modified with a hydrophobic group typically represented by methyl group, methoxy group, alkyl group, and alkoxy group. The form of the fine particle is preferably spherical but amorphous fine particles may also be included. In the invention, the term "spherical" includes not only a true spherical shape but also a shape somewhat deformed from a true sphere in which the ratio between the major diameter and the minor diameter may be, for example, up to about 3:1. The addition amount of the fine particles is preferably 2 to 8 mass% and, particularly preferably, 2.5 to 6 mass% based on the mass of the matrix ingredient.

Different from usual fillers, the hydrophobic fine particles of the invention are added by a smaller amount compared with the filler. Since the particle diameter is small and the specific surface area is extremely large, the fine particle also has an effect like that of the filler.

The layered compound includes, for example, clay minerals, silicates, graphite, and boron nitride. Among them, the clay minerals are classified into natural clay minerals and synthetic clay minerals. The natural clay minerals include, for example, montmorillonite. The synthetic clay minerals include, for example synthetic fluoro mica and synthetic smectite.

The surface of the layered compound is preferably modified with hydrophilic groups. In the layered compound, layers may or may not be peeled. Function of increasing the toughness can be provided even when they are not peeled, but occurrence of peeling can further improve the performance.

Further, usual organic or inorganic fillers well-known so far in the relevant field can be added. Further, short fibers of a length of several nm or less and other additives, for example, a flame retardant and a colorant can also be added.

One of preferred embodiments of the invention is one which is formed by mixing hydrophobic fine particles and hydrophilic layered compound in a hydrophilic resin and having a dendritic structure (arborescent structure) containing a structure in which fine particles are connected linearly at the periphery of the layered compound (linear structure). Thus, a crack developing in a direction perpendicular to the lamination direction of the layered compounds can be suppressed.

For obtaining the structure, it is necessary to sufficiently stir a resin ingredient (acid hardener and, optionally, hardening promotor, etc. may also be contained in a case of the epoxy resin), hydrophobic fine particles, and a layered compound modified at the surface thereof with hydrophilic groups by using an appropriate stirring device. Even when they are once mixed uniformly, the fine particles start to agglomerate after a while at the periphery of the layered compound to form a dendritic structure having a component in the lamination direction of the layered compound. The dendritic structure improves the mechanical strength of the hardened insulating material (hardened resin product).

When hydrophilic silica is mixed to a resin having hydrophilic groups (for example, epoxy resin) and they are stirred, silica is dispersed uniformly, however, the dendritic structure is not formed as in the case of the insulating material of the invention.

In examples to be described later, an epoxy resin having hydrophilic side chains is used as a matrix, silica is used as the fine particle, and montmorillonite is used as the layered compound.

An epoxy resin is a compound containing two or more epoxy groups each comprising two carbon atoms and one oxygen atom in one molecule. The epoxy groups are put to ring-opening reaction by an appropriate hardener to obtain a hardened resin product.

Preferred examples of the epoxy resin can include, for example, as follows: bisphenol A epoxy resin obtained by condensation of epichlorohydrin and polyhydric phenols such as bisphenols or polyhydric alcohol; brominated bisphenol A epoxy resin; hydrogenated bisphenol A epoxy resin; bisphenol F epoxy resin; bisphenol S epoxy resin; and bisphenol AF epoxy resin; biphenyl epoxy resin; naphthalene epoxy resin; fluorene epoxy resin; novolac epoxy resin'; phenol novolac epoxy resin; ortho-cresol novolac epoxy resin; tris(hydroxyphenyl)methane epoxy resin; glycidyl ether epoxy resin such as tetraphenylol ethane epoxy resin; glycidyl ester epoxy resin obtained by condensation of epichlorohydrin and carboxylic acid; and heterocyclic epoxy resin such as hydantoin epoxy resin obtained by reaction of triglycidyl isocyanate or epichlorohydrin and hydantoins. The resins may be used alone or as a mixture of two or more of them.

A hardening promoter for epoxy compound that promotes or controls the hardening reaction of the epoxy compound may also be added together with the hardener for epoxy compound. Particularly, when an acid anhydride hardener is added, since the hardening reaction is slow compared with adding other hardener such as an amine hardener, the hardening promotor for epoxy compound is often used. As the hardening promotor for epoxy compound, tertiary amines or salts thereof, quaternary ammonium compounds, imidazole, alkali metal alkoxides, etc. can be used.

Silica having a particle diameter at nano order in which silanol groups at the surface are substituted with alkyl groups, etc. so that the dispersibility can be improved in accordance with the hydrophilicity or hydrophobicity of the resin is referred to as hydrophobized nanosilica.

It has been known that when a hydrophilic nanosilica is dispersed in an epoxy resin before hardening, the viscosity does not increase remarkably but when a silica hydrophobized at the surface thereof (hydrophobized nanosilica) is dispersed, the viscosity tends to be higher and exhibit thixotropicity.

The thixotropicity may be developed due to a structure of surface-hydrophobized silica (gelled state), which is formed by hydrophobic interaction (apparent force exerting between hydrophobic particles each other in a hydrophilic solvent) between hydrophobic silica particles with respect to an epoxy resin having hydrophilic groups on the side chains.

Examples to be described later show that when such a structure is maintained also after the hardening treatment, the toughness of the hardened resin is increased. The insulating material of the invention may also contain additives such as an anti-sagging agent, a precipitation inhibitor, a defoaming agent, a levelling agent, a slipping agent, a dispersant, and a wetting agent for base material within a range not hindering the desired effect of the invention.

Using materials as described above, the resin material used in the invention is produced as below.

First, while applying at least one of a shearing force and a stretching force to a resin as the matrix, fine particles and a layered compound are mixed to the resin. In this case, at least one of inorganic oxides and fine elastomer may also be added optionally within a range not hindering the desired effect of the invention. This facilitates dispersion of the fine particle silica in the epoxy resin.

As a device for mixing, a planetary stirring device was used but this is not restrictive and any device capable of mixing while applying a shearing force or a stretching force may be used. For example, a beads mill mixer, a 3-roll mill mixer, a homogenizer mixer, and a resin mixer with stirring blade can be used.

While the layered compound is oriented by extrusion molding, the orientation structure of the layered compound can also be obtained by applying a force such as a tensile stress, a compression stress, or the like to the resin in accordance with a desired degree of orientation and ease of production.

The theory with respect to peeling of the insulating material is to be described.

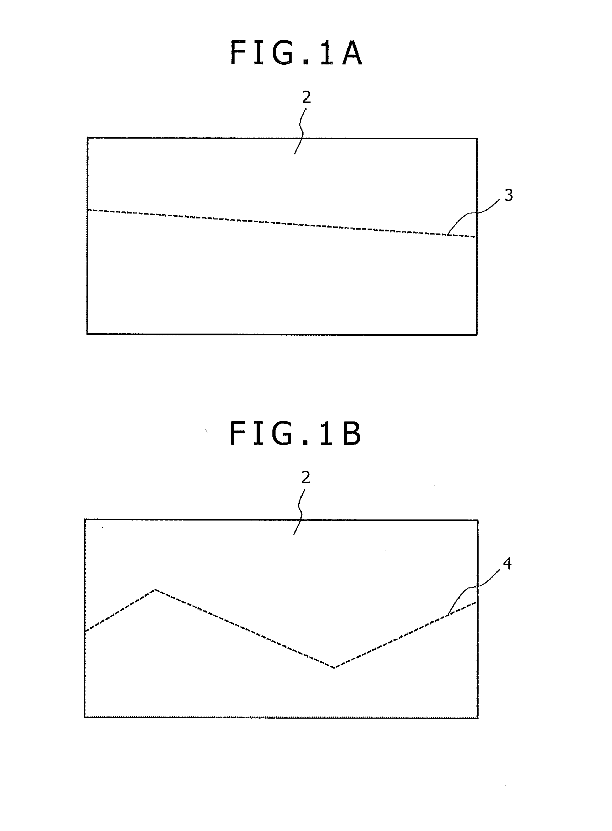

Fig. 1A and Fig. 1B schematically show cracks developing in an insulating material.

In the drawings, crack development paths formed in a fragmentary cross section of an insulating material 2 are shown by broken lines 3, 4. The crack development path 3 in Fig. 1A is linear. On the other hand, the crack development path 4 in Fig. 1B is in a zig-zag shape.

When the energy per unit area of separating the interface is constant, energy necessary for peeling (peeling energy) depends on a peeling path. That is, assuming that a crack width is identical, the peeling energy depends on the development distance of a crack.

When the crack development path in Fig. 1A and the crack development path 4 in Fig. 1B are compared, the peeling energy is larger in the crack development path 4 of the latter in which the crack development distance is longer.

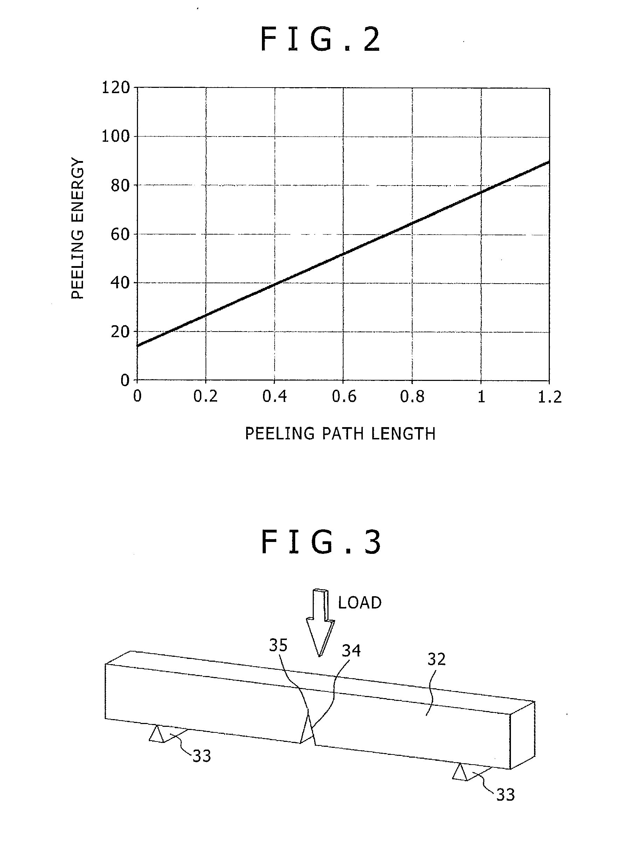

Fig. 2 shows a relation between the length of the peeling path and the peeling energy.

The graph qualitatively shows that when the peeling path is longer, necessary energy (peeling energy) is also larger. The peeling energy depends on the modifier at the surface, the directionality of the crack, and quantum chemical interaction with the matrix.' While it can be generally said that the peeling energy increases relative to the path, it is not easy to specify the unique quantitative value of the peeling energy theoretically or experimentally. However, it has been known that such a trend is shown qualitatively. Also for the start of crack growth due to instable fracture, since the crack develops along with unloading, a relation shown in Fig. 2 is established qualitatively also in such a case. That is, it is effective to make the crack development path longer for improving the toughness with a view point of suppressing the development of the crack.

The invention is to be described below with reference to examples.

### Example 1

A resin material A was manufactured by adding fine particles having hydrophobic groups to inside a resin having hydrophilic groups on the side chains by the following process, in order to confirm that the crack development path can be made longer by formation of a linear structure with the fine particles in the resin to improve the toughness value.

First, fine particles and a hardener were charged into an epoxy resin as a matrix and stirred by a planetary mixer. Then, the mixture was cast into a metal mold and kept at 80°C for 8 hours and at 140°C for 12 hours to harden the resin mixture. After the resin mixture was gradually cooled for 5 hours, it was released from the mold to obtain a test specimen.

Since it is intended here to confirm the effect that the crack development path changes due to the linear structure of the fine particles, the layered compound was not added. As the epoxy resin, a resin of a typical bisphenol A structure having two epoxy groups in one molecule of the monomer was used. As the hardener, phthalic acid anhydride as an acid anhydride was used. As the fine particles, silica hydrophobized with dimethyl silicone oil (manufactured by Aerosil Co., trade name of products: Aerosil RY200, primary particle diameter: 12 nm) was used and the addition amount was set to 5 mass parts based on the matrix.

Fig. 3 illustrates an outline of an experimental system for measuring a toughness value.

Measurement was according to ASTM D5045-91 and a fracture toughness was measured by a three-point bending test.

In the drawing, a prepared test specimen 32 had a notch 34. An initial crack 35 was formed by a razor blade to the deepest portion of the notch 34. Then, the test specimen 32 was placed horizontally in a state with the notch being downwarded, both ends thereof were supported at supporting points 33, and measurement was performed while exerting a predetermined load from above.

A relative toughness value was calculated on the basis of a test specimen with no addition of fine particles, that is, a specimen comprising the epoxy resin and the hardener.

The test specimen formed of the resin material A with addition of the hydrophobized silica as fine particle had a relative toughness value of 1.2. On the contrary, in a resin material in which hydrophilic fine particles (not hydrophobized silica) were dispersed by an identical amount (5 mass parts) instead of hydrophobized silica, a relative toughness value was 1.1.

By observing with an optical microscope the fracture surface of the resin material A in which the fine particles were hydrophobized silica, it was found that a number of grooved structures not found on the cross section of the resin material in which particles were dispersed uniformly. In view of the above, it was confirmed that the development of a crack was inhibited by a linear structure formed of the fine particles.

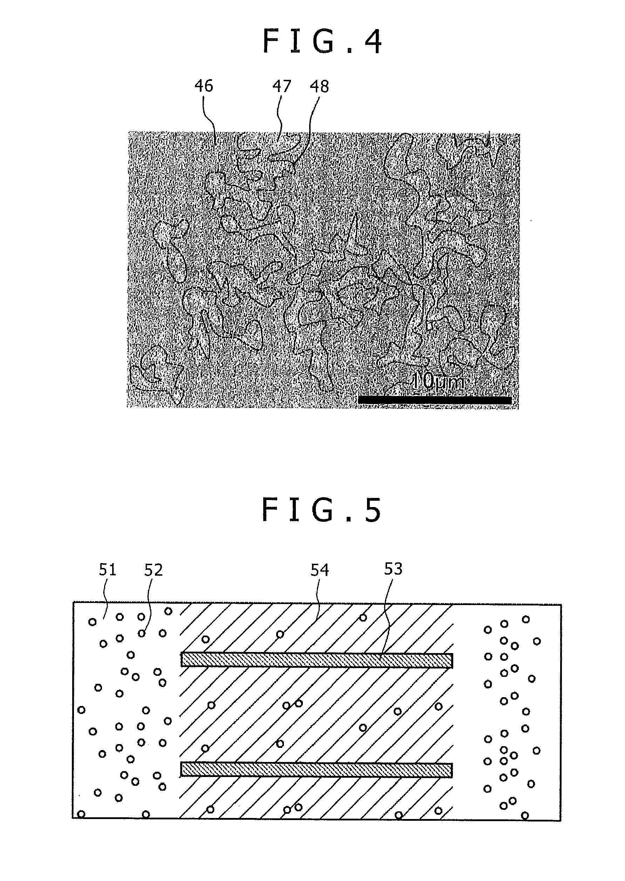

Fig. 4 illustrates an image taken by a scanning electron microscope (SEM) for the cross section of the resin material A manufactured by the process described above.

In the drawing, fine particles 47 as hydrophobized silica are dispersed in the matrix resin 46 comprising the epoxy resin. The fine particles 47 are agglomerated inside the matrix resin 46 to form a distribution zone 48 shown by a broken line. The broken line is added by the present inventors.

A distribution zone 48 represents a region in which fine particles 47 are present when agglomerates of the fine particles present in a distance of about 0.5 µm or less are connected. The distribution zone 48 has a dendritic structure (arborescent structure). The length or the width of a branch portion of the dendritic structure is 1 µm or more. This is about 100 times as large as the particle diameter 12 nm of the fine particle 47. Accordingly, in order that the fine particles 47 function as the dendritic structure, it is considered that fine particles by the number of about 100 have to be contained in the gelated product. In order that the distribution zone 48 prevails over the entire matric resin 46, it is also necessary that the maximum distance between the distribution zones 48 each other is about 100 times as long as the fine particle or more which is the length of the branched portion as the gelated product (1 µm).

However, if the minimum distance of a plurality of the dendritic structures is large, the dendritic structure forms isolate agglomerates and a gel structure prevailing over the entire resin cannot be formed. Accordingly, it is considered that the minimum distance is preferably about 100 times as long as the fine particle or less.

In the followings, description is to be made for a case of adding a layered compound.

Fig. 5 is a schematic view illustrating a fine structure of a hardened resin product containing the layered compound.

In the drawing, layered compounds 53 with the major axes thereof being oriented in an identical direction and fine particles 52 are dispersed inside a matrix resin 51. The matrix resin 51 has hydrophilic groups on the side chains. The layered compound 53 has a hydrophilic group. The fine particle 52 has a hydrophobic group on the surface thereof. A region 54 (hatched area) is a region put between major axes of the adjacent layered compounds 53.

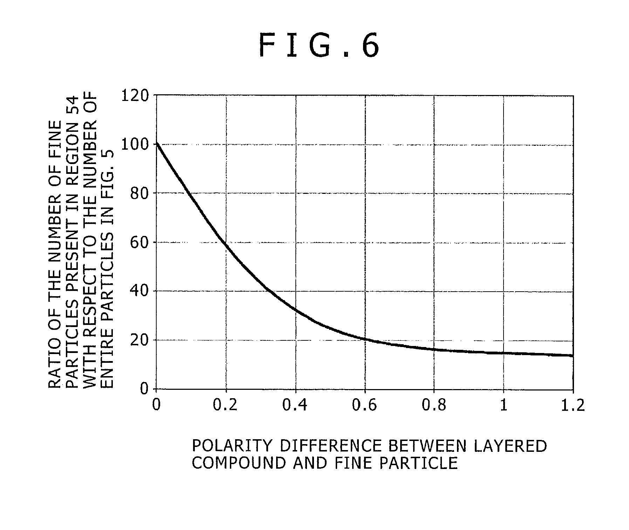

Fig. 6 illustrates a result of calculating the ratio of the number of the fine particles 52 belonging to the region 54 in the entire fine particles 52 contained inside the matrix resin 51 in Fig. 5 relative to the difference of polarity between the layered compound 53 and the fine particle 52 (polarity difference). A solubility parameter of Hildebrand is used for the polarity. When the solubility parameter is low, it can be said that the polarity is relatively hydrophobic.

It can be seen from Fig. 6 that as the polarity difference is larger, the fine particles 52 in Fig. 5 does not tend to belong to the region 54.

This is because free energy changes depending on the polarity difference and attraction and repulsion (force of repulsion) exert between molecules. That is, it is considered that as the polarity difference is larger, repulsion exerting between the layered compound 53 and the fine particle 52 increases and the fine particles less intrude between the adjacent layered compounds 53.

In the result of the calculation described above, the interaction between the fine particle 52 and the matrix 51 is set smaller in order to see a force exerting between the layered compound 53 and the fine particle 52. When the interaction is taken into consideration, fine particles 52 other than those present in the region 54 are agglomerated to form a dendritic structure.

To inhibit the development of a crack, it is effective to bend the development direction of the crack that develops in the orientation direction of the layered compound 53 to the lamination direction of the layered compound 53 to make the development path of the crack longer. Accordingly, it is desired that the dendritic structures as the distribution zone of the fine particles 52 are connected in plurality in the direction where the major axes of the layered compound 53 are laminated (lamination direction) to form a linear structure. In other words, it is desired that the layered compounds 53 and the linear structure (connection of distribution zone) form a network structure.

Difference of the fracture toughness value depending on the presence or absence of the layered compound is to be described with reference to examples.

Table 1 collectively shows ingredients which are in common between the resin material B and the resin material C (weight ratio).

The common ingredients are an epoxy resin for the main resin (matrix resin), an acid anhydride (phthalic acid anhydride) for the hardener, and a nano clay for the layered compound.

The nano clay is montmorillonite subjected at the surface to a hydrophilic treatment by applying an ion exchange treatment with polyoxypropylene methyl diethyl ammonium ((Na, Ca)_{0.33}(Al, Mg)₂(Si₄O₁₀)(OH)₂ • nH₂O). Montmorillonite is a kind of layered clay minerals having a size of 0.1 to 1 µm both for the major axis and the minor axis in a planar direction and a thickness of 1 to 10 nm. The addition amount of the nano clay was adjusted so as to be 10 mass parts based on 100 mass parts of the matrix resin.

Table 2 collectively shows fracture toughness values for a resin material B with no addition of silica and a resin material C with addition of silica as fine particles.

The silica is one which is hydrophobized with a dimethyl silicone oil (manufactured by Aerosil Co., trade name of products of Aerosil RY200, particle diameter: 12 nm). The addition amount of the silica was set to 5 mass parts based on 100 mass parts of the matrix resin.

In view of the table, it can be seen that the fracture toughness value is higher in the resin material C with addition of the silica as the fine particle. This is considered to be attributable to that the fine particles hinder the development of the crack.

**[Table 1]**

| Common constituent ingredient | Weight ratio |
|---|---|
| Resin main agent: epoxy resin | 1.0. |
| Hardener: acid anhydride, | 0.8 |
| Layered compound: nano clay | 0.1 |

**[Table 2]**

| | Addition of fine particles | Fracture toughness value* |
|---|---|---|
| Resin material B | not added | 1.0 |
| Resin material C | added | 1.1 |

| | | |
|---|---|---|
| * Relative value to resin material A | | |

The process for stirring the resin material B and the resin material C is identical with that for the resin material A.

After stirring, the resin material before hardening was extrusion molded such that the layered compounds were oriented inside the resin material. After the resin material was coated for a plurality of times, it was hardened by being kept at 80°C for 8 hours and at 140°C for 12 hours. Then, the product was gradually cooled for 5 hours. Then, the hardened resin material was cut out to obtain a test specimen. When the resin material is re-coated, since the orientation structure of the layered compounds is not maintained if the viscosity is excessively low, it is preferred that the material has an appropriate viscosity.

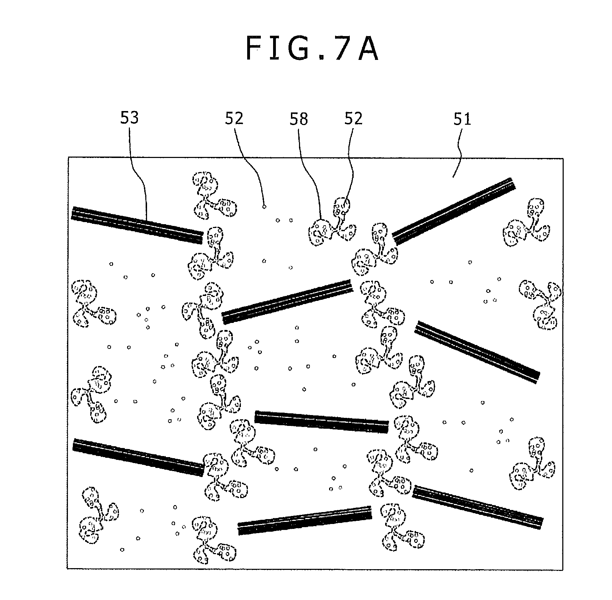

Fig. 7A schematically illustrates an SEM image for the cross section of the resin material C.

In the drawing, layered compounds 53 with the major axes being oriented substantially in one direction, and fine particles 52 are dispersed inside a matrix resin 51. A distribution zone 58 shown by a broken line is an arborescent dendritic structure formed by agglomeration of a plurality of the fine particles 52. It could be confirmed that less fine particles 52 were present between adjacent layered compounds 53, and a linear structure of the fine particles 52 having the component in the lamination direction of the layered compound 53 was present (linear structure of distribution zone 58). That is, the layered compounds 53 and the connection of the distribution zones 58 (linear structure) form a network structure (lattice structure).

When the addition amount of the layered compound is small, the structure illustrated in Fig. 7A is formed.

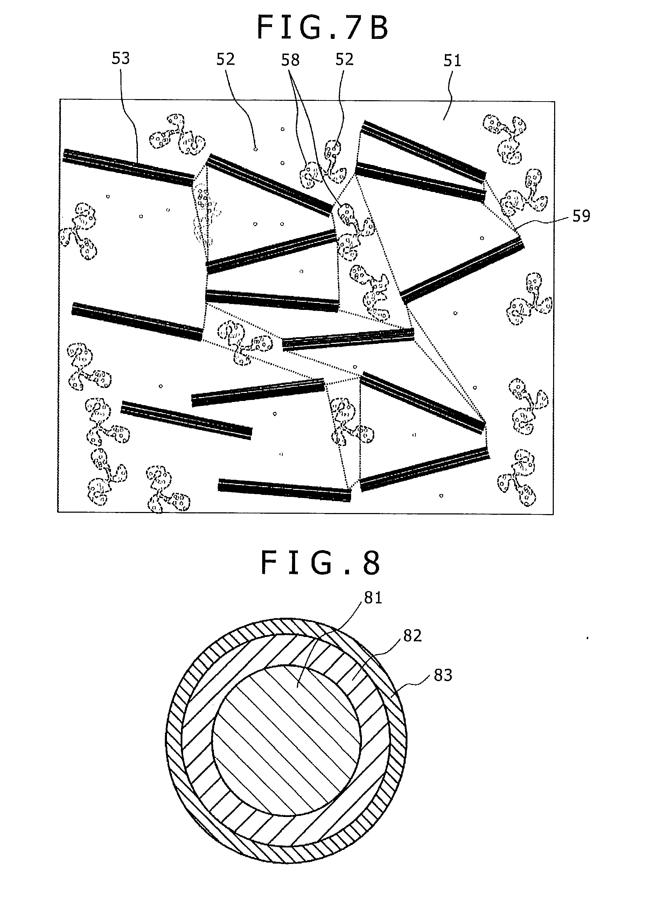

On the other hand, in a region where many layered clays are contained, the structure is as in Fig. 7B shown below.

Fig. 7B schematically illustrates an SEM image at a cross section of the resin material.

In the drawing, layered compounds 53 with major axes being oriented substantially in an identical direction and fine particles 52 are dispersed inside a matrix resin 51. A distribution zone 58 shown by a broken line is an arborescent dendritic structure formed by agglomeration of a plurality of the fine particles 52.

A dotted line 59 connecting two ends of (ends of major axes) close layered compounds 53 or adjacent layered compounds 53 constitute one side of a polygon with each end being as an apex. In the polygon which is formed only with the dotted lines 59, fine particles 52 are tended to gather and form a distribution zone 58. On the other hand, the distribution zone 58 is less formed in a polygon which is formed with the dotted line 59 and the major axes of the layered compounds 53 being as the sides of the polygon.

This is considered to be attributable to that the fine particles 52 and the layered compound 53 repulse each other. Accordingly, there is a high possibility that the distribution zone 58 is present near the gravitational center of a polygon which is formed only with the dotted lines 59.

The distribution zone 58 forms an obstacle to the crack that develops in the region of the polygon which is constituted only with the dotted line 59 and can suppress the development of the crack. In other words, the path along which the crack develops can be narrowed efficiently. This is an effect that cannot be obtained in a case where the fine particles are not agglomerated but dispersed uniformly.

Also in a case illustrated in Fig. 7A, it can be deemed that the distribution zone 58 is formed near the gravitational center of the polygon which is formed only with the dotted lines 59 each connecting two ends of (ends of major axes) the close layered compounds 53 or adjacent layered compounds 53.

With the configuration described above, since the development path of the crack is bent and made longer, the peeling energy increases. Thus, the toughness is improved.

In the example described above, the epoxy resin was used as the resin but, in addition, the same effect can be provided also by the use of a hydrophilic resin such as acrylic resin, nylon, and high thermal conductivity resin, or by the combination of hydrophilic layered compounds and hydrophobic fine particles.

While montmorillonite was used as the layered compound in the example described above, silicates, graphite, boron nitride, etc. can also be used in accordance with desired characteristics such as voltage withstanding characteristics and heat conduction characteristics. Further, since the development of the crack in the direction perpendicular to the lamination direction of the layered compound can also be suppressed also when ions or molecules are intercalated between the layers, the same effect as that of the examples described above can be provided. Graphite which is immersed in a hot condensed sulfuric acid to render the surface hydrophilic is used preferably..

The minimum particle diameter of silica that can be manufactured is 1 nm. Further, when fine particles with the particle diameter of 100 nm or more are mixed, agglomeration of the fine particles is inhibited by the Brownian motion and formation of the dendritic structure cannot be expected.

In the example described above, while silica having a primary particle diameter of about 12 nm was used, a distribution having the network structure is formed and the toughness value is improved so long as the diameter of the fine particles is 1 nm or more and 100 nm or less (1 to 100 nm).

In the example described above, while the nanosilica was used as the fine particle, the effect according to the invention can be obtained also by using inorganic oxides or elastomer particles or inorganic oxides or elastomer particles in which the surface thereof is put to hydrophobic treatment with methyl group, alkyl group, methoxy group, alkoxy group, etc.

In the example described above, the material used for each of the resin, the layered compound, and the fine particles were of the same kind, respectively. However, it is not always necessary that each of them comprises are same kind of material. A similar effect can be provided also by using a plurality kinds of resins, layered compounds, and fine particles within a range not deteriorating the effect of the invention. Further, particles of different sizes (particle diameter) may also be added within a range not deteriorating the effect of the invention. The particles of different sizes include, for example, silica, rubber, and alumina.

When the layered compound is added in excess of 50 mass parts based on the matrix in the insulating material, the viscosity of the insulating material is increased and the moldability is lowered. Accordingly, to obtain the effect of the present invention, the addition amount of the added layered compound is preferably 50 mass parts or less.

Layered compounds having a primary particle diameter from a millimeter order or more to a nanometer size can be prepared as the layered compound. Generally, since the viscosity tends to increase where the particle diameter of the layered compound is decreased, the particle diameter of the layered compound may be determined dependent on solubility of the insulating material to the matrix and moldability thereof, and advantageous effects identical with those of the example described above can also be obtained.

In the example described above, while the matrix, the layered compound, and the fine particle are hydrophilic, hydrophilic, and hydrophobic, respectively. According to the result in Fig. 6, the number of particles present between the layers of the layered compounds is smaller than the number of particles present in other regions than described above where the polarity difference between the matrix and the layered compound is small and the polarity difference between the layered compound and the fine particle is large. Thus, the distribution zone of the fine particles has a component in a direction parallel to the lamination direction of the layered compound. Accordingly, a result identical with that of the example described above can be obtained also when the polarities of the matrix, layered compound, and the fine particles are hydrophobic, hydrophobic, and hydrophilic, respectively.

An example in which the polarities of the matrix, the layered compound, and the fine particles are hydrophobic, hydrophobic, and hydrophilic, respectively includes a combination of fluoro-epoxy resin, hydrophobized montmorillonite, and hydrophilic silica.

### Example 2

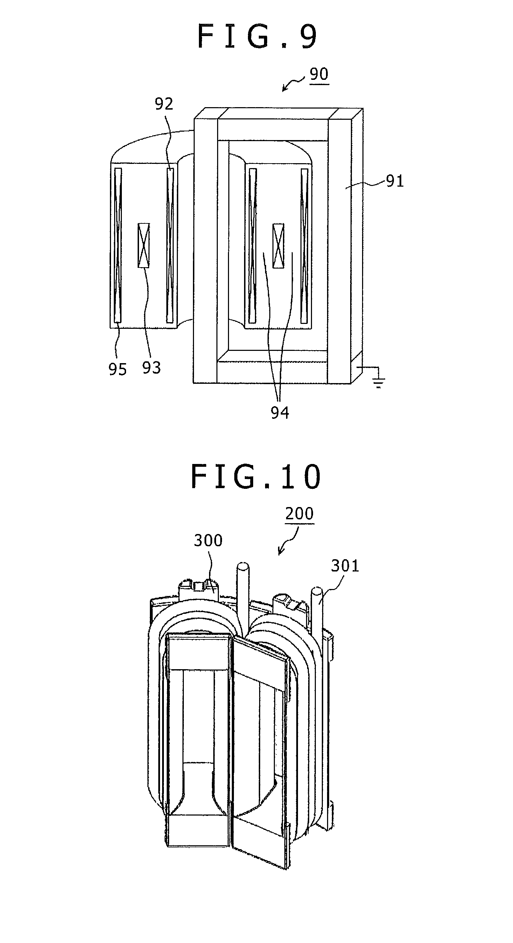

Fig. 10 is a schematic view of a stator portion of a motor.

In the drawing, a stator portion 200 of the motor includes a core 300 and an electric wire 301 wound around the core 300.

Fig. 8 is a cross sectional view illustrating an electric wire 301.

In the drawing, an insulating coating membrane 82 for insulation between conductors and between the conductor and the ground is provided around a conductor 81 to which a high voltage is applied and, further, an insulating protection membrane 83 is formed at the periphery thereof.

The resin material C of Example 1 in a state before hardening is coated on a copper wire in the longitudinal direction by extrusion molding to form an insulating membrane 82. When the resin materials C is used as the insulating membrane 82, the fracture toughness of the insulating membrane 82 can be improved to attain size and weight reduction and improvement of working life of the motor.

For improving the productivity, the particle diameter of the layered compound may be made large in addition to increase of an extrusion velocity in the extrusion molding and an identical effect can be obtained also in such a case.

### Example 3

Fig. 9 is a schematic view of a molded transformer.

In the drawing, a molded transformer 90 includes a core 91, a primary coil 92 at a low voltage wound around the core 91, a secondary coil 93 at a voltage higher than that of the primary coil 92 and provided outer side of the primary coil 92, and a pseudo outer shield coil 95 provided outer side of the secondary coil 93. The primary coil 92, the secondary coil 93, and the pseudo outer shield coil 95 are integrated by resin molding with the insulating material 94. The resin material C is used here as the insulating material 94.

The insulating material 94 is formed as described below.

The resin material C of Example 1 was extruded and cast in a state before hardening by several tens mm between the secondary coil 93 and the primary coil 92 such that the orientation direction of the layered compound inside the resin material C is aligned with the direction connecting the primary coil 92 and the secondary coil 93 at a shortest distance, to form an insulating material 94.

Thus, the fracture toughness and the strength of the insulating material 94 is improved. This can reduce the size and the weight and extend the working life of the molded transformer 14.

Further, the insulating material 94 can suppress the electric discharge at degraded portions where cracks are generated. Accordingly, the molded transformer 90 does not suffer from partial electric discharge, can maintain the reliability for a long time, and can be operated for a long time. Further, the molded transformer 90 can be used at a higher voltage with a size being equivalent with that of the transformer in the prior art.

In the molded transformer 90, while the insulating material was re-coated by 20 to 30 mm, the effect of the invention can be obtained so long as the membrane thickness of the insulating material 91 is 100 nm or more.

In Examples 2 and 3, while the resin material C of Example 1 was used as the insulating material for the electric wire coating membrane and the mold transformer, the resin material C can be applied also to high voltage electric equipment such as switch gears, motors, and inverters at portions requiring insulation, thereby capable of increasing the strength at the portions and improving the reliability of the high voltage electric equipment.

Further, when graphite or boron nitride is used as the layered compound, the thermal conductivity of the insulating material can be increased and, when such insulating material is used to appropriate portions of high voltage equipment, the size of the equipment can be reduced.

### Industrial Applicability

The insulating material of the invention has high dielectric withstanding voltage and toughness value and can be utilized, for example, as molding materials and insulating substrates of various kinds of electric equipment.

### Description of Reference Characters

2, 94: insulating material
3, 4: crack development path
32: test specimen
33: supporting point
34: notch
35: initial crack
46, 51: matrix resin
47, 52: fine particle
48, 58: distribution zone
53: layered compound
54: region
59: dotted line
81: conductor
82: insulation membrane
83: protection membrane
90: molded transformer
91: core
92: primary coil
93: secondary coil
95: pseudo outer shield coil
200: stator portion
300: core
301: electric wire

## Claims

1. An insulating material comprising:
a resin matrix;
a layered compound; and
fine particles, wherein
the layered compound and the fine particles are in a state dispersed in the matrix,
the layered compounds are in a plate or bar-like form with the major axes thereof being oriented in a predetermined direction, and
a plurality of the fine particles are agglomerated to form a dendritic structure and are dispersed between adjacent layered compounds.

2. The insulating material according to claim 1, wherein
the distribution zone of the fine particles form a linear structure in a direction along which the major axes of the layered compound are laminated.

3. The insulating material according to claim 1, wherein
the fine particles are agglomerated at the gravitational center of a polygon which is formed with lines each connecting two ends of the layered compound as a side.

4. The insulating material according to any one of claims 1 to 3, wherein
the matrix and the layered compounds are hydrophilic and the fine particles are hydrophobic.

5. The insulating material according to any one of claims 1 to 3, wherein
the matrix and the layered compound are hydrophobic and the fine particles are hydrophilic.

6. The insulating material according to any one of claims 1 to 5, wherein
90% or more of the major axes of the layered compound are in a direction within a range of -45° to 45°.

7. The insulating material according to any one of claims 1 to 6, wherein
the layered compound contains at least one element selected from the group consisting of silicates, montmorillonite, graphite, and boron nitride.

8. The insulating material according to any one of claims 1 to 7, wherein
an average value of primary particle diameters of the fine particles is from 1 to 100 nm.

9. A high voltage equipment using the insulating material according to any one of claims 1 to 8.

10. A high voltage equipment according to claim 9 wherein the high voltage equipment is a molded transformer.

11. A high voltage equipment according to claim 9 wherein the high voltage equipment is a motor.
